# EUROPÄISCHE PATENTSCHRIFT

(11) **EP 1 834 077 B1**
(45) Veröffentlichungstag und Bekanntmachung des Hinweises auf die Patenterteilung: **25.06.2008**
(21) Anmeldenummer: 05808125.8
(22) Anmeldetag: 18.11.2005
(51) Int. Cl.: F02M 37/10, B60K 15/077, F04F 5/46

(54) **KRAFTSTOFFVERSORGUNGSANLAGE FÜR EIN KRAFTFAHRZEUG**
FUEL SUPPLY SYSTEM FOR A MOTOR VEHICLE
SYSTEME D'ALIMENTATION EN CARBURANT D'UN VEHICULE AUTOMOBILE

(30) Priorität: 04.01.2005 DE 102005000731
(43) Veröffentlichungstag der Anmeldung: 19.09.2007
(73) Patentinhaber: Continental Automotive GmbH, 30165 Hannover (DE)
(72) Erfinder: DICKENSCHEID, Lothar, 55437 Ockenheim (DE); MÖHRING, Dirk, 65824 Schwalbach am Taunus (DE)
(86) Internationale Anmeldenummer: PCT/EP2005/056048
(87) Internationale Veröffentlichungsnummer: WO 2006/072503

(56) Entgegenhaltungen:
- DE-A1- 4 201 037
- DE-A1- 10 136 399
- DE-T2- 69 814 654
- US-A- 5 427 151
- PATENT ABSTRACTS OF JAPAN Bd. 009, Nr. 209 (M-407), 27. August 1985 (1985-08-27) & JP 60 069300 A (TOSHIBA KK), 19. April 1985 (1985-04-19)

## Beschreibung

Die Erfindung betrifft eine Kraftstoffversorgungsanlage für ein Kraftfahrzeug mit einer zur Förderung von Kraftstoff über eine Vorlaufleitung zu einer Brennkraftmaschine des Kraftfahrzeuges ausgebildeten Kraftstoffpumpe, mit einer Saugstrahlpumpe zur Förderung von Kraftstoff und mit einem Ventil zur Steuerung der Leistung der Saugstrahlpumpe, wie Z.B. in den Dokumenten DE 4201037 oder DE 10136 399 gezeigt.

Solche Kraftstoffversorgungsanlagen werden in heutigen Kraftfahrzeugen häufig eingesetzt und sind aus der Praxis bekannt. Die Saugstrahlpumpe ist in einer von der Brennkraftmaschine in den Kraftstoffbehälter rückführenden Rücklaufleitung angeordnet oder wird von der Kraftstoffpumpe mit Kraftstoff als Treibmittel versorgt. Das Ventil der bekannten Kraftstoffversorgungsanlage stellt sicher, dass auch bei geringer Treibmenge an Kraftstoff die Saugstrahlpumpe eine ausreichende Förderleistung aufweist. Da der Treibdruck an Kraftstoff starken Schwankungen unterliegen kann, wird das Ventil von einer Federkraft in eine verschlossene Stellung vorgespannt. Mit steigendem Druck wird das Ventil geöffnet und die Saugstrahlpumpe erhält Kraftstoff als Treibmittel. Mit steigendem Druck steigt die Öffnung des Ventils, wodurch die Förderleistung der Saugstrahlpumpe ansteigt.

Nachteilig bei der bekannten Kraftstoffversorgungsanlage ist, dass bei variablem Treibdruck die Förderleistung der Saugstrahlpumpe variiert. Bei hohem Treibdruck ist daher die Treibmenge zu hoch. Hierdurch geht jedoch hydraulische Leistung verloren.

Der Erfindung liegt das Problem zugrunde, eine Kraftstoffversorgungsanlage der eingangs genannten Art so weiterzubilden, dass die Saugstrahlpumpe weitgehend unabhängig von dem Treibdruck eine konstante Förderleistung aufweist.

Dieses Problem wird erfindungsgemäß dadurch gelöst, dass das Ventil zur Verkleinerung einer zur Versorgung der Saugstrahlpumpe mit Kraftstoff als Treibmittel ausgebildeten Öffnung bei steigendem Treibdruck ausgebildet ist.

Durch diese Gestaltung lässt sich die Saugstrahlpumpe auf einen minimalen Treibdruck und einer minimalen Treibmenge auslegen. Mit steigendem Treibdruck wird die Öffnung des Ventils verkleinert und damit ein Verlust an hydraulischer Leistung durch überschüssige Förderung von Kraftstoff zu der Saugstrahlpumpe vermieden. Hierdurch sinkt die Treibmenge bei steigendem Teildruck. Insbesondere bei nach dem Otto-Prinzip arbeitenden Brennkraftmaschinen hat es sich als vorteilhaft erwiesen, wenn eine Düse der Saugstrahlpumpe an der Vorlaufleitung angeschlossen ist. Damit lässt sich auch die Kraftstoffpumpe nach dem Kraftstoffbedarf der Brennkraftmaschine steuern und sicherstellen, dass keine von der Kraftstoffpumpe erzeugte hydraulische Leistung verloren geht.

Die erfindungsgemäße Kraftstoffversorgungsanlage gestaltet sich konstruktiv besonders einfach, wenn das Ventil und die Düse der Saugstrahlpumpe als bauliche Einheit ausgebildet sind. Ein weiterer Vorteil dieser Gestaltung besteht darin, dass die Saugstrahlpumpe und das Ventil besonders wenig Bauraum benötigen.

Ein ausreichend kräftiger Treibmittelstrahl bei teilweise geschlossenem Ventil lässt sich gemäß einer anderen vorteilhaften Weiterbildung der Erfindung einfach sicherstellen, wenn ein Ventilkörper des Ventils in die Öffnung der Düse der Saugstrahlpumpe hineinragt. Durch diese Gestaltung ist die Öffnung des Ventils gleichzeitig die Öffnung der Düse der Saugstrahlpumpe.

Die Steuerung des Querschnitts der Düse der Saugstrahlpumpe erfordert einen besonders geringen baulichen Aufwand, wenn ein Ventilkörper axial verschieblich geführt ist und einen sich verjüngenden Abschnitt hat und mit dem sich verjüngenden Abschnitt in die Öffnung der Düse der Saugstrahlpumpe hineinragt. Durch diese Gestaltung wirken auf den Ventilkörper der von der Vorlaufleitung erzeugte Druck und der hinter der Düse befindliche geringere Umgebungsdruck ein. Damit wird die Stellung des Ventilkörpers und damit des sich verjüngenden Abschnitts verstellt, was die Einstellung eines entsprechenden Querschnitts der Düse der Saugstrahlpumpe zur Folge hat. Im einfachsten Fall ist der sich verjüngende Abschnitt konisch gestaltet.

Bei kurz nach dem Start der Kraftstoffpumpe geringem Förderdruck erhält die Saugstrahlpumpe gemäß einer anderen vorteilhaften Weiterbildung der Erfindung eine ausreichende Menge an Kraftstoff als Treibmittel, wenn das Ventil ein den Ventilkörper in eine Grundstellung, in der die Öffnung am größten ist, vorspannendes Federelement hat. Durch diese Gestaltung spannt das Federelement den Ventilkörper entgegen der Strömungsrichtung des Kraftstoffs vor.

Die axial verschiebliche Führung des Ventilkörpers erfordert gemäß einer anderen vorteilhaften Weiterbildung der Erfindung einen besonders geringen baulichen Aufwand, wenn der Ventilkörper mit einem Führungsabschnitt verbunden ist, wenn der Führungsabschnitt in einem rohrförmigen Abschnitt des Ventils geführt ist und den sich verjüngenden Abschnitt trägt.

Eine Verwirbelungen verursachende Strömungsumlenkung des Ventils lässt sich gemäß einer anderen vorteilhaften Weiterbildung der Erfindung einfach vermeiden, wenn der rohrförmige Abschnitt sich gerade an einen mit der Vorlaufleitung verbundenen Abzweig anschließt.

Das Ventil und die Saugstrahlpumpe gestalten sich gemäß einer anderen vorteilhaften Weiterbildung der Erfindung besonders kompakt, wenn sich das Federelement an einem die Öffnung der Düse aufweisenden Gehäuseteil und an dem Führungsabschnitt abstützt.

Die bauliche Einheit aus Ventil und Düse der Saugstrahlpumpe lässt sich besonders kostengünstig fertigen, wenn der sich verjüngende Abschnitt des Ventilkörpers und die Öffnung der Düse der Saugstrahlpumpe jeweils rund sind. Hierdurch ist der Strömungsquerschnitt der Düse der Saugstrahlpumpe in jeder Stellung des Ventilkörpers ringförmig gestaltet.

Zur weiteren Verringerung der Verwirbelungen im Bereich der Saugstrahlpumpe und des Ventils trägt es gemäß einer anderen vorteilhaften Weiterbildung der Erfindung bei, wenn der sich verjüngende Abschnitt des Ventilkörpers zumindest einen Kanal aufweist. Durch diese Gestaltung vermag die Düse der Saugstrahlpumpe in jeder Stellung des Ventilkörpers einen oder mehrere ausreichend starke Treibmittelstrahle zu erzeugen. Im einfachsten Fall wird der Kanal von einer Abflachung an dem Ventilkörper gebildet. Vorzugsweise wird die Verjüngung hierbei von dem Kanal gebildet. Dabei kann der Ventilkörper zylindrisch sein.

Zur Verringerung der Energieaufnahme der Kraftstoffpumpe trägt es gemäß einer anderen vorteilhaften Weiterbildung der Erfindung bei, wenn die Leistungsabgabe der Kraftstoffpumpe nach dem Kraftstoffbedarf der Brennkraftmaschine regelbar ist. Bei solchen Kraftstoffversorgungsanlagen liegt an der Kraftstoffpumpe eine geringe elektrische Spannung, wenn nur eine geringe Menge an Kraftstoff zu der Brennkraftmaschine gefördert werden soll. Steigt der Kraftstoffbedarf der Brennkraftmaschine, wird die an der Kraftstoffpumpe anliegende Spannung erhöht. Das Ventil stellt dabei sicher, dass die Saugstrahlpumpe eine ausreichende Menge an Kraftstoff als Treibmittel erhält.

Bei einem kurzzeitig hohen Kraftstoffbedarf der Brennkraftmaschine lässt sich der gesamte, von der Kraftstoffpumpe geförderte Kraftstoff zu der Brennkraftmaschine fördern, wenn der Ventilkörper die Öffnung bei einem vorgesehenen hohen Druck in der Vorlaufleitung vollständig verschließt.

Die Erfindung lässt zahlreiche Ausführungsformen zu. Zur weiteren Verdeutlichung ihres Grundprinzips sind zwei davon und werden nachfolgend beschrieben. Diese zeigt in
- Fig. 1: eine erfindungsgemäße Kraftstoffversorgungsanlage für ein Kraftfahrzeug,
- Fig. 2: eine stark vergrößerte Schnittdarstellung einer Düse einer Saugstrahlpumpe der Kraftstoffversorgungsanlage aus Figur 1,
- Fig. 3: eine Seitenansicht der Düse der Saugstrahlpumpe aus Figur 2,
- Fig. 4: eine Seitenansicht einer weiteren Ausführungsform der Düse der Saugstrahlpumpe aus Figur 2.

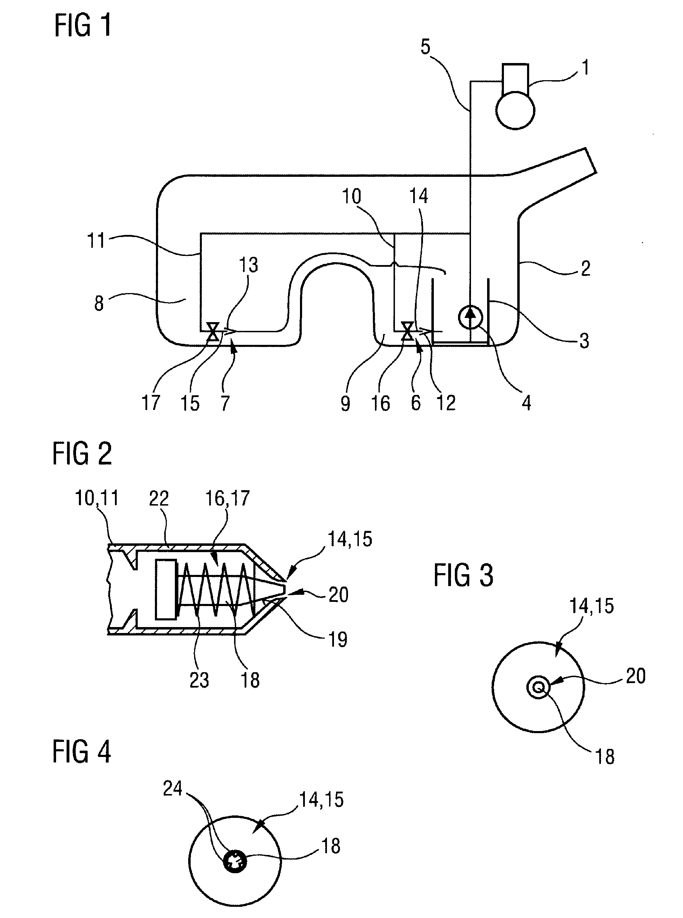

Figur 1 zeigt eine Kraftstoffversorgungsanlage zur Versorgung einer Brennkraftmaschine 1 eines Kraftfahrzeuges mit Kraftstoff aus einem Kraftstoffbehälter 2. Die Kraftstoffversorgungsanlage hat einen innerhalb des Kraftstoffbehälters 2 angeordneten Schwalltopf 3 und eine Kraftstoffpumpe 4, welche Kraftstoff aus dem Schwalltopf 3 über eine Vorlaufleitung 5 zu der Brennkraftmaschine 1 fördert. Die Leistung der Kraftstoffpumpe 4 wird in Abhängigkeit von dem Kraftstoffbedarf der Brennkraftmaschine 1 gesteuert. Weiterhin hat die Kraftstoffversorgungsanlage zwei Saugstrahlpumpen 6, 7, von denen eine Kraftstoff aus einer Kammer 8 des Kraftstoffbehälters 1 in den Schwalltopf 3 fördert. Die andere Saugstrahlpumpe 6 fördert Kraftstoff aus der Kammer 9 in den Schwalltopf 3. Die Saugstahlpumpen 6, 7 werden jeweils über einen von der Vorlaufleitung 5 wegführenden Abzweig 10, 11 mit Kraftstoff als Treibmittel versorgt und weisen jeweils eine vor einem Mischrohr 12, 13 angeordnete Düse 14, 15 auf. Weiterhin ist in den Abzweigen 10, 11 jeweils ein Ventil 16, 17 angeordnet. Über die Ventile 16, 17 wird der Volumenstrom an Kraftstoff, den die Saugstrahlpumpen 6, 7 erhalten, geregelt.

Figur 2 zeigt stark vergrößert eine Schnittdarstellung durch eine bauliche Einheit der Ventile 16, 17 und der Düsen 14, 15 der Saugstrahlpumpen 6, 7 aus Figur 1. Die baulichen Einheiten sind identisch aufgebaut. Hierbei ist zu erkennen, dass ein Ventilkörper 18 des Ventils 16, 17 einen sich verjüngenden Abschnitt 19 aufweist, mit dem er in eine Öffnung 20 der Düse 14, 15 der Saugstrahlpumpe 6, 7 hineinragt. Der sich verjüngende Abschnitt 19 ist konisch gestaltet und mit einem Führungsabschnitt 21 verbunden. Der Ventilkörper 18 ist in einem sich an den von der Vorlaufleitung 5 aus Figur 1 weggeführten Abzweig 10, 11 anschließenden rohrförmigen Abschnitt 22 axial verschieblich geführt. Ein Federelement 23 spannt den Ventilkörper 18 gegen die Strömungsrichtung im rohrförmigen Abschnitt 22 vor. Mit steigendem Druck in dem von der Vorlaufleitung 5 aus Figur 1 abgezweigten Abschnitt 10, 11 wird der Ventilkörper 18 gegen die Kraft des Federelementes 23 verschoben und verringert den Strömungsquerschnitt der Öffnung 20 der Düse 14, 15.

Das Ventil 16, 17 ist in einer Mittelstellung dargestellt, in der der sich verjüngende Abschnitt 19 in die Öffnung 20 der Düse 14, 15 hineinragt. Hierdurch ist der Strömungsquerschnitt der Öffnung 20 ringförmig gestaltet, wie es in Figur 3 in einer Seitenansicht auf die Düse 14, 15 deutlich zu erkennen ist. Zum vollständigen Verschließen der Öffnung 20 kann der Ventilkörper 18 zudem einen nicht dargestellten Wulst aufweisen.

Figur 4 zeigt eine weitere Ausführungsform der Düse 14, 15 der Saugstrahlpumpen 6, 7 aus Figur 1 in einer Seitenansicht, bei der der Ventilkörper 18 des Ventils 16, 17 Kanäle 24 aufweist. Hierdurch erzeugt die Düse 14, 15 der Saugstrahlpumpe 6, 7 einzelne Treibmittelstrahlen.

## Patentansprüche

1. Kraftstoffversorgungsanlage für ein Kraftfahrzeug mit einer zur Förderung von Kraftstoff über eine Vorlaufleitung zu einer Brennkraftmaschine des Kraftfahrzeuges ausgebildeten Kraftstoffpumpe, mit einer Saugstrahlpumpe zur Förderung von Kraftstoff und mit einem Ventil zur Steuerung der Leistung der Saugstrahlpumpe, **dadurch gekennzeichnet, dass** das Ventil (16, 17) zur Verkleinerung einer zur Versorgung der Saugstrahlpumpe (6, 7) mit Kraftstoff als Treibmittel ausgebildeten Öffnung (20) bei steigendem Treibdruck ausgebildet ist.

2. Kraftstoffversorgungsanlage nach Anspruch 1, **dadurch gekennzeichnet, dass** eine Düse (14, 15) der Saugstrahlpumpe (6, 7) an der Vorlaufleitung (5) angeschlossen ist.

3. Kraftstoffversorgungsanlage nach Anspruch 1 oder 2, **dadurch gekennzeichnet, dass** das Ventil (16, 17) und die Düse (14, 15) der Saugstrahlpumpe (6, 7) als bauliche Einheit ausgebildet sind.

4. Kraftstoffversorgungsanlage nach einem der vorhergehenden Ansprüche, **dadurch gekennzeichnet, dass** ein Ventilkörper (18) des Ventils (16, 17) in die Öffnung (20) der Düse (14, 15) der Saugstrahlpumpe (6, 7) hineinragt.

5. Kraftstoffversorgungsanlage nach zumindest einem der vorhergehenden Ansprüche, **dadurch gekennzeichnet, dass** ein Ventilkörper (18) axial verschieblich geführt ist und einen sich verjüngenden Abschnitt (19) hat und mit dem sich verjüngenden Abschnitt (19) in die Öffnung (20) der Düse (14, 15) der Saugstrahlpumpe (6, 7) hineinragt.

6. Kraftstoffversorgungsanlage nach zumindest einem der vorhergehenden Ansprüche, **dadurch gekennzeichnet, dass** das Ventil (16, 17) ein den Ventilkörper (18) in eine Grundstellung, in der die Öffnung (20) am größten ist, vorspannendes Federelement (23) hat.

7. Kraftstoffversorgungsanlage nach zumindest einem der vorhergehenden Ansprüche, **dadurch gekennzeichnet, dass** der Ventilkörper (18) mit einem Führungsabschnitt (21) verbunden ist, dass der Führungsabschnitt (21) in einem rohrförmigen Abschnitt (22) des Ventils (16, 17) geführt ist und den sich verjüngenden Abschnitt (19) trägt.

8. Kraftstoffversorgungsanlage nach zumindest einem der vorhergehenden Ansprüche, **dadurch gekennzeichnet, dass** der rohrförmige Abschnitt (22) sich gerade an einen mit der Vorlaufleitung (5) verbundenen Abzweig (10, 11) anschließt.

9. Kraftstoffversorgungsanlage nach zumindest einem der vorhergehenden Ansprüche, **dadurch gekennzeichnet, dass** sich das Federelement (23) an einem die Öffnung (20) der Düse (14, 15) aufweisenden Gehäuseteil und an dem Führungsabschnitt (21) abstützt.

10. Kraftstoffversorgungsanlage nach zumindest einem der vorhergehenden Ansprüche, **dadurch gekennzeichnet, dass** der sich verjüngende Abschnitt (19) des Ventilkörpers (18) und die Öffnung (20) der Düse (14, 15) der Saugstrahlpumpe (6, 7) jeweils rund sind.

11. Kraftstoffversorgungsanlage nach zumindest einem der vorhergehenden Ansprüche, **dadurch gekennzeichnet, dass** der sich verjüngende Abschnitt (19) des Ventilkörpers (18) zumindest einen Kanal (24) aufweist.

12. Kraftstoffversorgungsanlage nach zumindest einem der vorhergehenden Ansprüche, **dadurch gekennzeichnet, dass** die Leistungsabgabe der Kraftstoffpumpe (4) nach dem Kraftstoffbedarf der Brennkraftmaschine (1) regelbar ist.

13. Kraftstoffversorgungsanlage nach zumindest einem der vorhergehenden Ansprüche, **dadurch gekennzeichnet, dass** der Ventilkörper (18) die Öffnung (20) bei einem vorgesehenen hohem Druck in der Vorlaufleitung (5) vollständig verschließt.

## Claims

1. Fuel supply system for a motor vehicle having a fuel pump which is designed to deliver fuel via a feed line to an internal combustion engine of the motor vehicle, having a suction jet pump for delivering fuel, and having a valve for controlling the capacity of the suction jet pump, **characterized in that** the valve (16, 17) is designed to reduce the size of an opening (20), which is designed to supply the suction jet pump (6, 7) with fuel as a propellant, with rising propulsion pressure.

2. Fuel supply system according to claim 1, **characterized in that** a nozzle (14, 15) of the suction jet pump (6, 7) is connected to the feed line (5).

3. Fuel supply system according to claim 1 or 2,
**characterized in that** the valve (16, 17) and the nozzle (14, 15) of the suction jet pump (6, 7) are designed as a structural unit.

4. Fuel supply system according to one of the preceding claims, **characterized in that** a valve body (18) of the valve (16, 17) projects into the opening (20) of the nozzle (14, 15) of the suction jet pump (6, 7).

5. Fuel supply system according to at least one of the preceding claims, **characterized in that** a valve body (18) is guided so as to be axially moveable and has a narrowing section (19) and projects with the narrowing section (19) into the opening (20) of the nozzle (14, 15) of the suction jet pump (6, 7).

6. Fuel supply system according to at least one of the preceding claims, **characterized in that** the valve (16, 17) has a spring element (23) which preloads the valve body (18) into a basic position in which the opening (20) is at its largest.

7. Fuel supply system according to at least one of the preceding claims, **characterized in that** the valve body (18) is connected to a guide section (21), and **in that** the guide section (21) is guided in a tubular section (22) of the valve (16, 17) and supports the narrowing section (19).

8. Fuel supply system according to at least one of the preceding claims, **characterized in that** the tubular section (22) directly adjoins a branch (10, 11) which is connected to the feed line (5).

9. Fuel supply system according to at least one of the preceding claims, **characterized in that** the spring element (23) is supported on a housing part, which has the opening (20) of the nozzle (14, 15), and on the guide section (21).

10. Fuel supply system according to at least one of the preceding claims, **characterized in that** the narrowing section (19) of the valve body (18) and the opening (20) of the nozzle (14, 15) of the suction jet pump (6, 7) are in each case round.

11. Fuel supply system according to at least one of the preceding claims, **characterized in that** the narrowing section (19) of the valve body (18) has at least one duct (24) .

12. Fuel supply system according to at least one of the preceding claims, **characterized in that** the output capacity of the fuel pump (4) can be regulated according to the fuel demand of the internal combustion engine (1).

13. Fuel supply system according to at least one of the preceding claims, **characterized in that** the valve body (18) completely closes the opening (20) at a designated high pressure in the feed line (5).

## Revendications

1. Système d'alimentation en carburant pour un véhicule automobile, comportant une pompe à carburant permettant de transférer du carburant, par l'intermédiaire d'une conduite d'alimentation, vers un moteur à combustion interne du véhicule automobile, une pompe à jet aspirant destinée à transférer du carburant et une soupape permettant de commander la puissance de la pompe à jet aspirant, **caractérisé par le fait que** la soupape (16, 17) est conçue pour réduire, lorsque la pression motrice augmente, une ouverture (20) prévue pour alimenter la pompe à jet aspirant (6, 7) en carburant en tant que fluide moteur.

2. Système d'alimentation en carburant selon la revendication 1, **caractérise par le fait qu'**un gicleur (14, 15) de la pompe à jet aspirant (6, 7) est raccordé sur la conduite d'alimentation (5).

3. Système d'alimentation en carburant selon la revendication 1 ou 2, **caractérisé par le fait que** la soupape (16, 17) et le gicleur (14, 15) de la pompe à jet aspirant (6, 7) constituent une unité constructive.

4. Système d'alimentation en carburant selon l'une des revendications précédentes, **caractérisé par le fait qu'**un corps de soupape (18) de la soupape (16, 17) fait saillie dans l'ouverture (20) du gicleur (14, 15) de la pompe à jet aspirant (6, 7).

5. Système d'alimentation en carburant selon au moins l'une des revendications précédentes, **caractérisé par le fait qu'**un corps de soupape (18) est guidé en translation dans le sens axial et a une partie (19) qui s'amincit et fait saillie, par la partie (19) qui s'amincit, dans l'ouverture (20) du gicleur (14, 15) de la pompe à jet aspirant (6, 7).

6. Système d'alimentation en carburant selon au moins l'une des revendications précédentes, **caractérisé par le fait que** la soupape (16, 17) a un organe à ressort (23) qui contraint le corps de soupape (18) dans une position de base dans laquelle l'ouverture (20) est la plus grande.

7. Système d'alimentation en carburant selon au moins l'une des revendications précédentes, **caractérisé par le fait que** le corps de soupape (18) est lié à une section de guidage (21), que la section de guidage (21) est guidée dans une partie (22) en forme de tube de la soupape (16, 17) et qu'elle porte la partie (19) qui s'amincit.

8. Système d'alimentation en carburant selon au moins l'une des revendications précédentes, **caractérisé par le fait que** la partie (22) en forme de tube prolonge en ligne droite une dérivation (10, 11) reliée à la conduite d'alimentation (5).

9. Système d'alimentation en carburant selon au moins l'une des revendications précédentes, **caractérisé par le fait que** l'organe à ressort (23) s'appuie sur une partie du boitier comportant l'ouverture (20) du gicleur (14, 15) et sur la section de guidage (21).

10. Système d'alimentation en carburant selon au moins l'une des revendications précédentes, **caractérisé par le fait que** la partie (19) qui s'amincit du corps de soupape (18) et l'ouverture (20) du gicleur (14, 15) de la pompe à jet aspirant (6, 7) sont toutes les deux rondes.

11. Système d'alimentation en carburant selon au moins l'une des revendications précédentes, **caractérisé par le fait que** la partie (19) qui s'amincit du corps de soupape (18) comporte au moins un canal (24).

12. Système d'alimentation en carburant selon au moins l'une des revendications précédentes, **caractérisé par le fait que** la puissance délivrée par la pompe à carburant (4) est réglable en fonction du besoin en carburant du moteur à combustion interne (1).

13. Système d'alimentation en carburant selon au moins l'une des revendications précédentes, **caractérisé par le fait que** le corps de soupape (18) ferme complètement l'ouverture (20) pour une pression élevée prédéterminée dans la conduite d'alimentation (5).
